# EUROPEAN PATENT SPECIFICATION

(11) **EP 3 918 399 B1**
(45) Date of publication and mention of the grant of the patent: **22.07.2026**
(21) Application number: 20704196.3
(22) Date of filing: 28.01.2020
(51) Int. Cl.: G02B 21/00, G02B 21/26, G02B 21/34

(54) **A COMPACT FLUORESCENCE MICROSCOPE AND A CELL MONITORING SYSTEM**
KOMPAKTES FLUORESZENZMIKROSKOP UND ZELLÜBERWACHUNGSSYSTEM
MICROSCOPE À FLUORESCENCE COMPACT ET SYSTÈME DE SURVEILLANCE DE CELLULES

(30) Priority: 28.01.2019 US 201962797753 P; 29.01.2019 US 201962798443 P; 29.01.2019 SE 1950103; 01.02.2019 SE 1950127; 30.04.2019 US 201962840900 P
(43) Date of publication of application: 08.12.2021
(73) Proprietor: Cytena GmbH, 79106 Freiburg im Breisgau (DE)
(72) Inventor: GATENHOLM, Erik, 411 33 Göteborg (SE); MARTINEZ, Hector, 413 20 Göteborg (SE); JOHANSSON, Niclas, 412 58 Göteborg (SE); PERSSON, Sebastian, 412 58 Göteborg (SE); MICHA, Adam, 443 71 Gråbo (SE); ABUSHALL, Hany, Blacksburg, Virginia 24060 (US); JONES, Bryan, Buchanan, Virginia 24066 (US); SVANBERG, Jockum, 415 14 Göteborg (SE); ANDRÉN, Anton, 431 38 Mölndal (SE); JUNG, Kyung Hun, Blacksburg, VA 24060 (US); PEERBOOM, Nadia, 417 58 Göteborg (SE)
(74) Representative: Grabovac, Dalibor
(86) International application number: PCT/EP2020/052062
(87) International publication number: WO 2020/157077

(56) References cited:
- EP-A1- 2 808 671
- EP-A1- 2 916 158
- EP-A2- 2 199 380
- WO-A1-2012/051718
- WO-A1-2015/164844
- WO-A1-2018/234837
- WO-A2-2004/092672
- KR-B1- 101 502 236

## Description

### TECHNICAL FIELD

The present invention relates to the field of fluorescence microscopy and cell monitoring systems.

### BACKGROUND

A fluorescent microscope is an optical microscope that takes advantage of the fluorescent properties of a sample to generate a high-contrast image. Fluorescence is a process in which certain molecules called fluorophores emit light upon excitation by incident light of specific wavelength. Thanks to the color shift of the emitted light with regards to the excitation light, the signal originating from the fluorophores contained within the sample can be distinguished from the surrounding illumination light, allowing for the resulting microscopy images to display bright objects on a dark background. EP 2916 158 A1 discloses a fluorescent microscope.

Fluorescence microscopy has had a great impact in live cell imaging. It made it possible to resolve fine cellular structures, otherwise invisible to a regular optical microscope, due to low contrast and/or diffraction limited resolution. Furthermore, by specifically targeting regions of interest or objects with particular biological properties, insights into cellular functions and processes can be gained with a fluorescent microscope.

The basic operation of a fluorescence microscope can be described as follows. The illumination light generated by a light source is collimated using optical lenses. The light then passes through an excitation filter to specifically select for a range of wavelengths corresponding to the excitation spectrum of the sample. The objective lens focuses the light onto the sample, where it is absorbed to excite the fluorophores contained inside the sample. These fluorophores start emitting light at a longer wavelength, which is collected by the condenser lens. The emission light then passes through an emission filter blocking any remaining excitation light wavelengths. Finally, in digital microscopy, the fluorescence light is focused by a tube lens onto an image sensor to form the final image.

To provide the user with a choice of different colors of the excitation light and thereby increase the number of compatible fluorophores, fluorescent microscopes commonly use multiple light sources and/or excitation filters of different wavelengths. At the same time, to ensure low background signals, only light originating from the sample should reach the image sensor, while the light originating from the light source(s) should be successfully filtered out. In this case, the imaged fluorescent structures are displayed with a high degree of contrast against a dark background. The limits of detection are generally governed by the levels of light that the camera can detect with negligible amounts of noise.

The most common type of illumination used in fluorescence microscopes is epifluorescence illumination. The illumination and detection units of the microscope are located on the same side of the specimen, meaning that excitation and emission light rays pass through the same objective lens. To separate the emission light from the excitation light of shorter wavelength, dichroic mirrors are generally used. Such mirrors possess delicately tuned transmission and reflection properties, highly dependent on the wavelength of the incident light. For example, shortpass dichroic mirrors transmit light of wavelengths shorter than a cutoff value and reflect light of higher wavelengths, while longpass dichroic mirrors transmit light of wavelengths longer than the cutoff value and reflect light of shorter wavelengths. Bandpass dichroic mirrors on the other hand transmit light of one or more specific range(s) of wavelengths, while reflecting all other wavelengths.

Epi-fluorescence has a number of significant advantages over transfluorescence illumination, in which the illumination and detection units of the microscope are located on different sides of the specimen. For instance, epi-fluorescence illumination is capable of giving higher signal-to-noise ratios than traditional transfluorescence illumination, due to the fact that most of the excitation light is transmitted through the specimen and hence the majority of the signal received back by the objective is the desired emission light originating from the sample. Another major advantage of epifluorescence illumination compared to other types of illumination is that having illumination and detection on the same side of the specimen allows for a more compact design of the microscope. Indeed, advanced microscopes are often bulky, making them difficult to transport and taking up valuable lab space. More compact and portable designs on the other hand open up for different types of applications, such as clinical use, field studies, use inside an incubator, monitoring of cells, monitoring of cells when in connection with bioprinting and monitoring of cells when in connection with biodispensing of live cells.

### SUMMARY OF THE INVENTION

It is an object of the present disclosure to provide a compact fluorescence unit for imaging fluorescent samples. A further object is to provide a compact cell monitoring system for automatic cell monitoring for example for use in bioprinting, biodispensing, and cell culturing, and which may be positioned in a cell culture incubator. The cell monitoring system may comprise the compact fluorescence unit.

The invention is defined by the appended independent patent claim and embodiments are defined by the dependent claims.

According to a first aspect there is provided a compact fluorescence microscope unit for imaging fluorescent samples, comprising: a) an illumination layer comprising one or more light source(s), one or more optical lens(es), one or more excitation filter(s), and/or one or more optical mirror(s); b) one or more dichroic mirror(s); c) an objective lens; d) a detection layer comprising an image sensor, one or more emission filter(s), and/or one or more optical mirror(s). The one or more dichroic mirror(s) is/are arranged to: transmit light originating from the illumination layer and pass through the objective lens to illuminate the sample; and reflect fluorescent light emitted by the sample and collected by the objective lens toward the detection layer.

The compact fluorescence microscope unit may take advantage of epifluorescence illumination (with or without the addition of confocal, total internal reflection fluorescence, or super resolution illumination), and one or more dichroic mirror(s) to allow for a compact fluorescence microscope capable of high-resolution and multi-color imaging. Due to its compact size, the microscope can be used inside an incubator for cell culture monitoring and live-cell assays. The majority of fluorescence microscopes with epifluorescence illumination uses dichroic mirrors reflecting the excitation light (originating from the light source(s)) and transmitting the emission light (originating from the fluorescent specimen). To allow for more flexibility with regards to the design of the microscope, in particular the relative locations of the illumination layer (comprising amongst others the light source(s)), and the detection layer (comprising amongst others the image sensor), the present invention employs a dichroic mirror of inverse design, *i.e.* transmitting the excitation light and reflecting the emission light. This inverse dichroic mirror is placed between the illumination and the detection layer and separates the excitation and emission light path. In this way it is ensured that only the light originating from the fluorescent specimen reaches the image sensor, and not the surrounding illumination light.

According to a second aspect there is provided a cell monitoring system for automatic cell monitoring. The system comprising an outer casing, a sample tray adapted to receive a sample, said sample tray being positioned within the outer casing, a gantry system arranged at least partly within the outer casing, said gantry system comprising a framework of connected extended members, said framework comprising a first extended member being configured to extend in at least a latitudinal direction, and at least one second extended member being configured to extend in a longitudinal direction, said longitudinal direction being perpendicular to said latitudinal direction and a gantry frame structure extending along an orthogonal direction being perpendicular to the latitudinal direction and the longitudinal direction, at least one movement member and an imaging system arranged on the gantry frame structure. The imaging system comprises a detection layer and an illumination layer, and wherein the gantry frame structure comprises an internal orifice enabling the sample tray to be positioned within said orifice, and said detection layer is arranged within the outer casing and attached to a lower portion of the frame structure, and under the sample tray, such that the detection layer is movable in a planar direction in relation to the sample tray in response to actuation of said at least one movement members.

The imaging system of the cell monitoring system may be the compact fluorescence microscope unit according to the first aspect.

Due to its compact size, the cell monitoring system can be used inside an incubator for cell culture monitoring and live-cell assays.

The cell monitoring system enables cell monitoring in an automated manner, wherein the cell monitoring further may be connected to control units and processing units.

The illumination system may be attached to the frame structure of the gantry system, such that the illumination layer and the detection layer are synchronically movable in a planar movement in response to actuation of said at least one movement member.

While the number of possible applications are endless, the fluorescence microscope and the cell monitoring system may be especially suited for fields such as cell biology, stem cell research, cancer research, drug screening, 3D bioprinting and tissue engineering.

### DRAWINGS

Fig. 1 is a schematic diagram showing a conceptual configuration of a compact fluorescence microscope.
Fig. 2 is a schematic diagram showing an example for the conceptual configuration described in Fig. 1 with one illumination channel.
Fig. 3 is a schematic diagram showing a very compact design of a fluorescence microscope with three illumination channels.
Fig. 4 is a schematic diagram expanding upon the illumination layer of the compact fluorescence microscope shown in Fig. 3.
Fig. 5 is a schematic diagram showing a similar configuration as the fluorescence microscope shown in Fig. 2. Here the fluorescence has been turned upside down to be in the upright position rather than being in the inverted configuration.
Fig. 6 is a schematic diagram showing a conceptual drawing like the one shown in Fig. 1 with the difference that in Fig. 6 three stacked dichroic mirrors are used to create the same function as the single dichroic mirror shown in Fig. 1.
Fig. 7 is a schematic diagram showing a conceptual configuration of a compact fluorescence microscope, wherein a plurality of light sources are placed in a row next to each other.
Fig. 8 is a schematic diagram expanding upon the illumination layer of the compact fluorescence microscope shown in Fig. 7.
Fig. 9 is a diagram disclosing a cell monitoring system for automatic cell monitoring comprising an outer casing, a sample tray positioned within the outer casing, a gantry system arranged at least partly within the outer casing, and an imaging system arranged on the gantry system, wherein the imaging system may be the fluorescence microscope unit shown in any of Figs 1-8.
Fig. 10 is a diagram showing a perspective view of a gantry system enabling synchronized movement of the imaging system detection layer and the imaging system illumination layer or any subsystem of the illumination layer.
Fig. 11 is a diagram showing a top view of the gantry system in Fig. 10.
Fig. 12 is a schematic drawing of a three-armed turret. Each arm holds an assembly of electronic and optical components including a light source, a collimating lens and an excitation filter.
Fig. 13 is a schematic drawing of a compact fluorescence microscope incorporating a rotational moving structure with the turret of Fig. 12.
Fig. 14 is a schematic drawing of a rotational moving structure with n number of arms.
Fig. 15 is a schematic drawing showing a top view of a translational moving structure of n number of units. The structure can move in a straight line in either direction. Each unit includes at least an integrated light source, optical lens and/or optical mirrors and a filter set.

### DETAILED DESCRIPTION

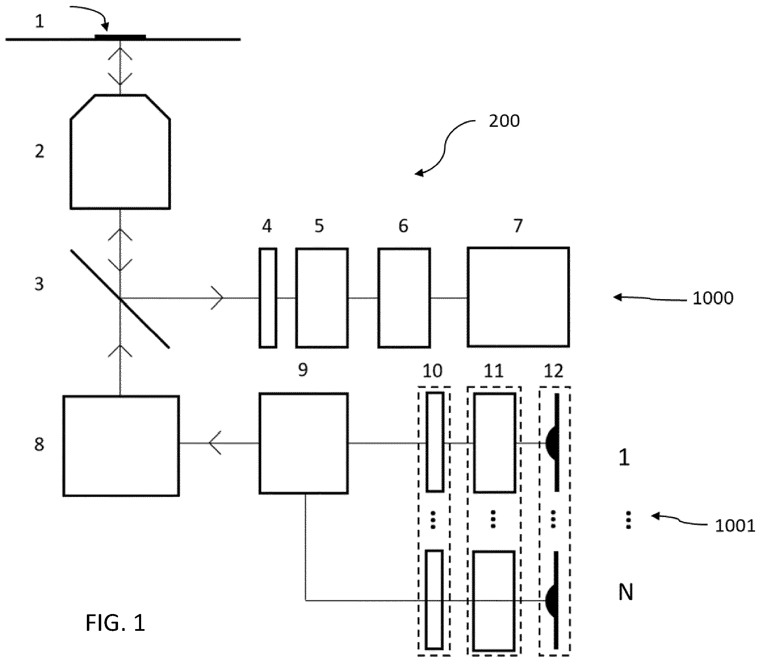

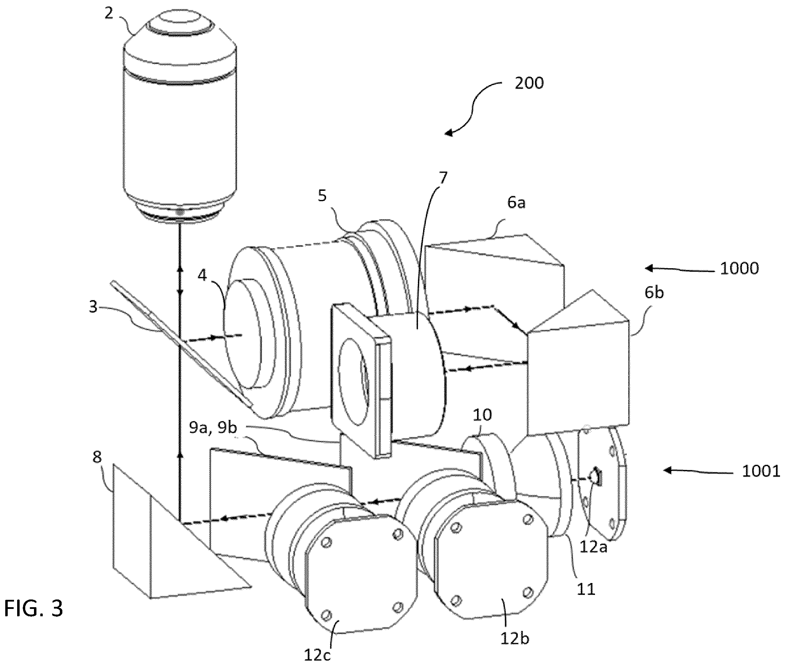

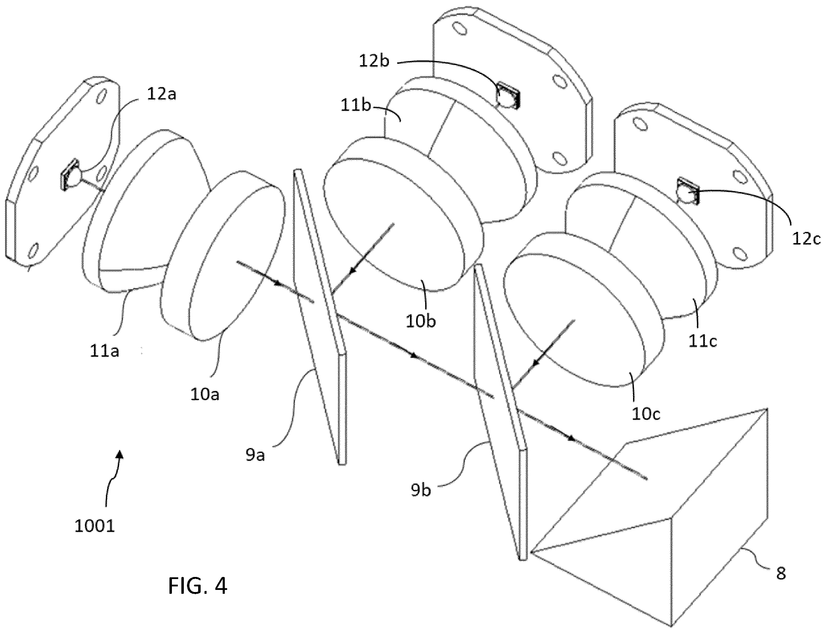

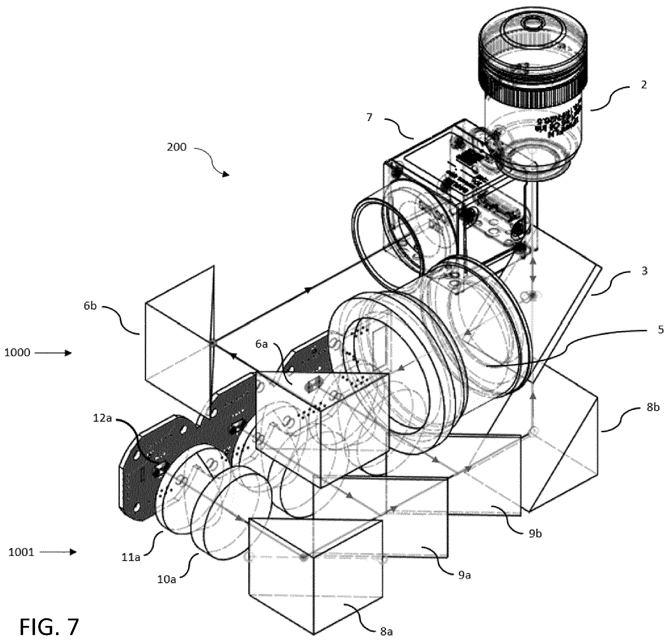

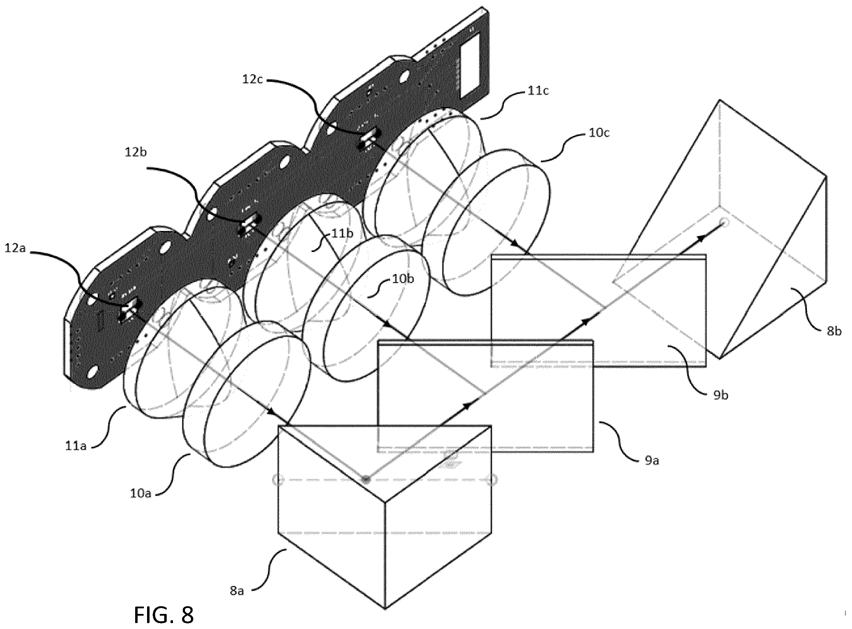

Figs 1, 2, 3, 5, 6 and 7 show a schematic diagram of a conceptual configuration of a compact fluorescence microscope unit 200, an inverted epifluorescence microscope unit, for imaging fluorescent samples 1. The fluorescent microscope unit 200 comprising an illumination layer 1001 comprising one or more light sources 12, 12a, 12b, 12c which may be one or more LED lamps, one or more a lasers, one or more incandescence lamps, and/or one or more gas-discharge lamps. Typically, there are three light sources 12a, 12b, 12c for three light channels, namely: the red, green and blue channels, see Fig. 3. The light sources 12a, 12b, 12c may be arranged as shown in Fig. 4 such that at least one of the light sources is arranged at an angle towards another/the other light sources. Alternatively, as shown in *e.g.* Fig. 8, the light sources 12a, 12b, 12c may be arranged in a row next to each other, such that rays that come out of the light sources are parallel or close to parallel to each other.

As shown, the light rays coming out of those light sources 12, 12a, 12b, 12c should be collimated using collimating optics, an optical lens 11, 11a, 11b, 11c (spherical lens, aspherical lens, achromatic lens or cylindrical lens). Then the collimated beam should pass through one or more absorption, reflective or dichroic excitation filters 10, 10a, 10b, 10c (shortpass filter, longpass filter, bandpass filter, dichroic filter, notch filter, absorptive filter, monochromatic filter, guided-mode resonance filter, and/or wedge filter) to pass only that band of light wavelengths that will appropriately excite the sample in the corresponding channel. Following this, the light beams from the different light sources 12, 12a, 12b, 12c are combined into one light path using beam combining optics 9, 9a, 9b. The beam combining optics may comprise one or more optical mirrors 9, 9a, 9b (plane mirror, concave mirror, convex mirror and/or spherical mirror) and/or one or more interference filters 9, 9a, 9b. For design considerations steering of the light beam using steering optics, optical mirror 8, might be necessary. The light then will transmit through a special dichroic mirror 3, 3a, 3b, 3c (single band dichroic mirror, multiband dichroic mirror, shortpass dichroic mirror, and/or longpass dichroic mirror) rather than being reflected and be passed through an objective lens 2 (low magnification objective lens, high magnification objective lens, oil immersion objective lens, water immersion objective lens, dry objective lens, long working distance objective lens, and/or phase contrast objective lens) and focused onto the fluorescence sample 1. The fluorophores in the sample 1 absorb and after a short amount of time fluoresce light at a higher wavelength. The fluoresced light from the sample 1 after being picked by the objective lens 2 will be reflected from the same special dichroic mirror 3, 3a, 3b, 3c (rather than being transmitted through it like traditional dichroic mirrors). The fluorescence microscope unit 200 further comprises a detection layer 1000 comprising an image sensor 7 (charge coupled device sensor, scientific complementary metal oxide semiconductor sensor, monochrome sensor, and/or color sensor) one or more emission filters 4 (shortpass filter, longpass filter, bandpass filter, dichroic filter, notch filter, absorptive filter, monochromatic filter, guided-mode resonance filter, and/or wedge filter), and/or one or more optical mirrors 5, 6a, 6b. The reflected light then passes through the emission filter 4 which only passes the band of wavelengths that are known to have been fluoresced by the fluorescence sample 1. Following this, a tube lens, optical mirror 5, is used to focus the imaging beam onto the image sensor 7 of a camera. Steering optics, optical mirror 6a, 6b, between the tube lens 4 and the image sensor 7 can be used to change the direction, shape and form of the imaging beam in order to make the design as compact as possible.

The described configuration using dichroic mirror(s) 3, 3a, 3b, 3c of inverse design between the illumination layer 1001 and the detection layer 1000, *i.e.* there is transmission of the excitation light (originating from the light source(s)) and reflection of the emission light (originating from the fluorescent specimen), made it possible to flip the detection layer 1000 and illumination layer 1001 and make the microscope more compact compared to known fluorescent microscopes with epifluorescence illumination, which use dichroic mirrors reflecting the excitation light and transmitting the emission light. With the present design it is ensured that only the light originating from the fluorescent specimen reaches the image sensor, and not the surrounding illumination light.

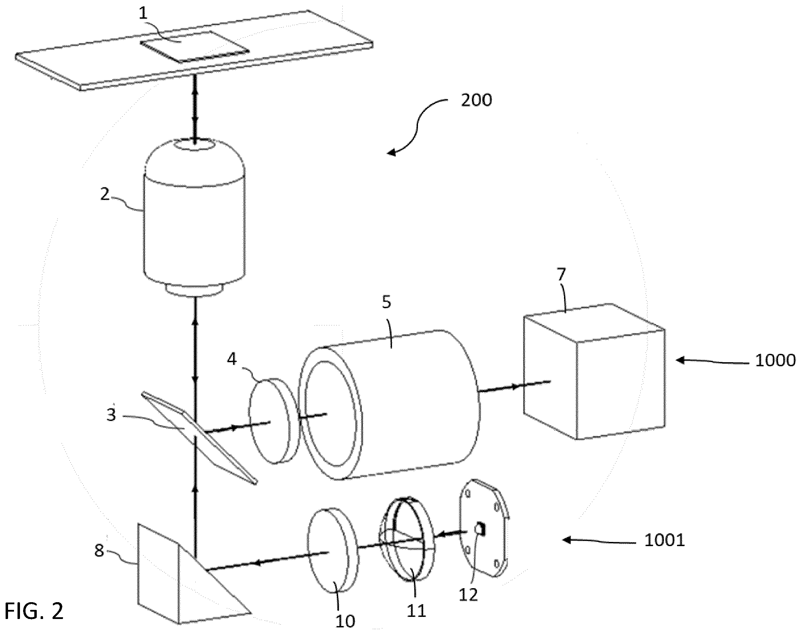

The compact fluorescence microscope unit 200 may take advantage of epifluorescence illumination (with or without the addition of confocal, total internal reflection fluorescence, or super resolution illumination) and one or more dichroic mirror(s) to allow for a compact fluorescence microscope capable of high-resolution and multi-color imaging. Due to its compact size, the microscope can be used inside an incubator for monitoring of cell cultures, live-cell assays, and during bioprinting and biodispensing. Fig. 2 is a schematic diagram showing an example for the conceptual configuration described in FIG. 1. This example contains only one illumination channel. The light source shown 12 is an LED mounted on a printed circuit board. The light coming out of the LED is then being collimated by an aspheric lens 11 and then is passed through an excitation filter 10. The steering optics 8 in this case includes a right-angle mirror that reflects the light beam 90° towards the dichroic mirror 3. The fluorescence sample 1 here is mounted onto a microscope slide placed under a cover slip.

Fig. 3 is a schematic diagram showing a very compact design of the fluorescence microscope unit 200. As illustrated, it can be described as comprising of two layers, namely: an illumination layer 1001 at the bottom and an imaging or detection layer 1000 above it. As mentioned, traditional dichroic mirrors usually reflect the illumination light beam while they transmit the imaging light beam, which is the opposite of what is used here. In this example the illumination layer 1001 at the bottom consists of three channels of lights 12a, 12b, 12c. The light rays coming from these three channels, namely: the red, green and blue channels, are being combined using the two dichroic mirrors at the bottom 9a, 9b. The light then is being reflected 90° using a right-angle mirror 8. After the light travels through the special dichroic mirror 3 and is focused onto the sample 1, fluorescence light is picked back by the objective 2 and is reflected from the dichroic mirror 3 and is directed towards the emission filter 4 and tube lens 5 which focuses the image onto the image sensor 7. The two right-angle mirrors 6a, 6b stir the focusing rays coming out of the tube lens 5 180° to fall onto the camera image sensor 7 allowing the design to be as compact as possible.

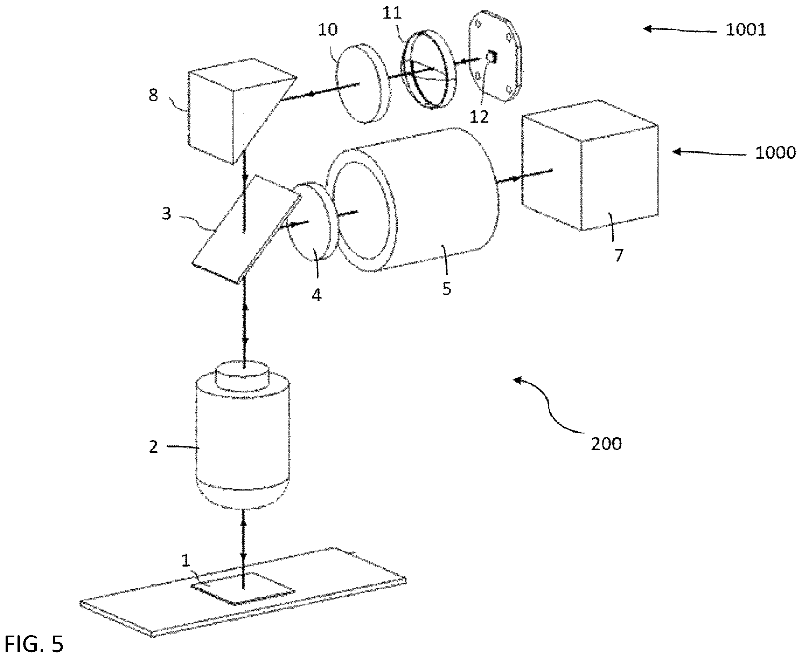

Fig. 4 is a schematic diagram expanding upon one part of the compact fluorescence microscope unit 200 shown in Fig. 3, specifically the illumination layer 1001. As seen in the figure, two dichroic mirrors 9a, 9b are used to combine the rays coming from the three channels of light sources 12a, 12b, 12c. Fig. 5 is a schematic diagram showing a similar configuration as the fluorescence microscope unit shown in Fig. 2. It has here been turned upside down to be in the upright position rather than being in an inverted configuration.

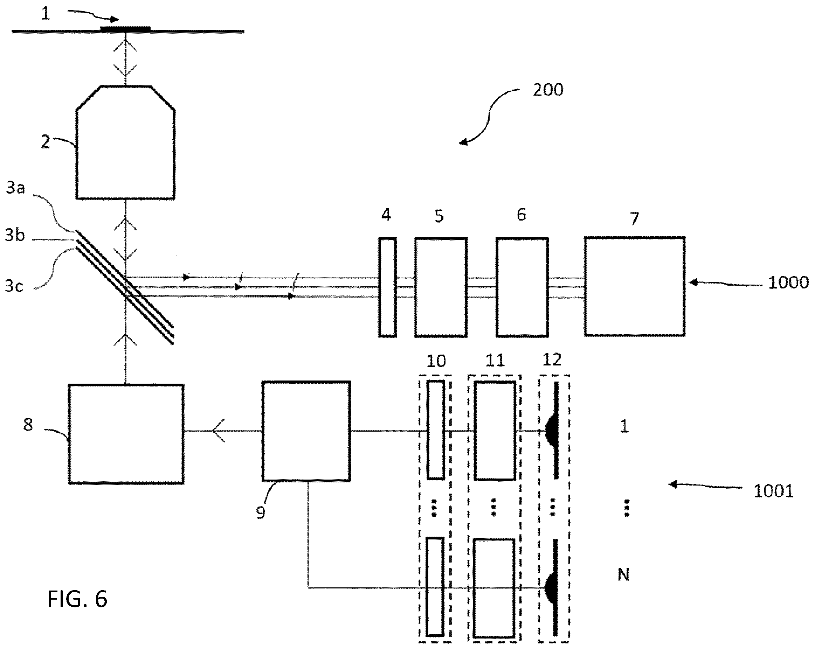

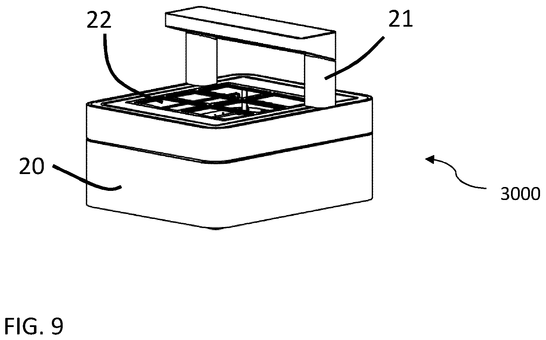

Fig. 6 is a schematic diagram showing a conceptual drawing like the one shown in Fig. 1. This one mainly differs in the use of three stacked dichroic mirrors 3a, 3b, 3c to create the same function as that of the special dichroic mirror 3 shown in Fig. 1. Each of these three stacked dichroic mirrors 3a, 3b, 3c function on one of the three channels shown in the inverted fluorescence microscope configuration. Fig. 9 is a diagram disclosing a cell monitoring system 3000 for automatic cell monitoring comprising an outer casing 20, a sample tray 22 positioned within the outer casing 20 and adapted to receive a sample 1, e.g. a cell culture vessel, and a gantry system 21 arranged at least partly within the outer casing 20.

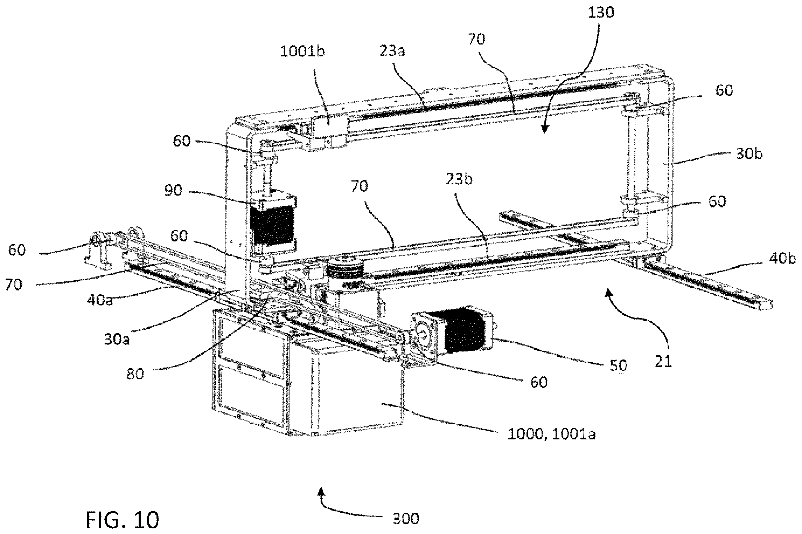

The gantry system, see Fig. 10, comprises a framework of connected extended members, and comprises at least a first extended member 23a, 23b being configured to extend in at least a latitudinal direction, and at least one second extended member 40a, 40b being configured to extend in a longitudinal direction, said longitudinal direction being perpendicular to said latitudinal direction and a gantry frame structure 30a, 30b extending along an orthogonal direction being perpendicular to the latitudinal direction and the longitudinal direction, and at least one movement member 50, 60, 70, 80, 90. An imaging system 300 is arranged on the gantry frame structure. The imaging system 300 comprises a detection layer 1000, which also may be called an optics module, and an illumination layer or illumination system 1001a, wherein the imaging system 300 may be the compact fluorescent microscope unit 200 described above. The gantry frame structure 30a, 30b comprises an internal orifice 130 enabling the sample tray 22 to be positioned within the orifice. The detection layer 1000 is arranged within the outer casing 20 and attached to a lower portion of the frame structure, and under the sample tray 22, such that the detection layer 1000 is movable in a planar direction in relation to the sample tray 22 in response to actuation of the at least one movement members 50, 60, 70, 80, 90.

The illumination layer 1001a may be attached to the frame structure of the gantry system, such that the illumination layer 1001a and the detection layer 1000 are synchronically movable in a planar movement in response to actuation of the at least one movement member 50, 60, 70, 80, 90. As a result of this configuration, monitoring of cells on the sample tray 22 can be done exclusively by moving the detection layer 1000 and illumination layer 1001a synchronically. There is no need to move the sample, *e.g.* cell culture vessel, once it is placed on a sample tray. The sample tray may preferably comprise markers to indicate an area within which the cell culture vessels are to be placed in order for the monitoring to be accomplished. The effect of this arrangement is that one motor may be used to move both the detection layer 1000 and the illumination layer 1001a simultaneously, to scan or monitor a cell culture vessel placed in the internal orifice 130 of the frame structure 30a, 30b of the gantry system. The gantry system allows a compact and rigid movement of the detection layer 1000 and thus the cell monitoring system is a compact device that enables a convenient and efficient monitoring of cell cultures, while being able to be positioned and/or maintained within a cell culture incubator. Thus, the monitoring can take place during culturing in an incubator.

The cell monitoring system 3000 may further comprise a control unit (not shown) for controlling the actuation of the movement members. Such a control unit may be used to control the movement of the gantry frame structure in a predetermined pattern. Furthermore, such a control unit may enable the imaging system to read and monitor the samples 1 on the sample tray 22 in a predetermined pattern. The control unit is preferably arranged within the outer casing 20.

The system may further comprise a processing unit (not shown) to acquire data, such as collecting and processing images retrieved from the imaging system 300. The data acquired may be transmitted to the cloud, or to any computer or other processing means. The processing unit may be within the casing or it may be adapted to communicate with the detection layer 1000, the control unit and the illumination system wirelessly.

The gantry system may be of an H-bot belt configuration, a Double belted configuration, or a Double lead screw configuration. Preferably, the mechanism is of a Double belted configuration, or a Double lead screw configuration. Most preferably, the gantry is driven by a double belted configuration mechanism. Thus, the mechanism is preferably a combined belt mount and tensioning mechanism comprising a double-shafted rotational motor in combination with belts. This mechanism in the cell monitoring system of the present disclosure enables a compact design with a synchronized movement of the detection layer and the illumination layer.

The cell monitoring system may further comprise a damping system, in order to reduce vibration when the imaging system 300 is moving by means of the gantry.

The illumination layer 1001a may be arranged in connection with the detection layer 1000, and attached to a lower portion of the frame structure. In such case the imaging system 300 may be the compact fluorescence microscope unit 200 discussed above and shown in Figs 1-8.

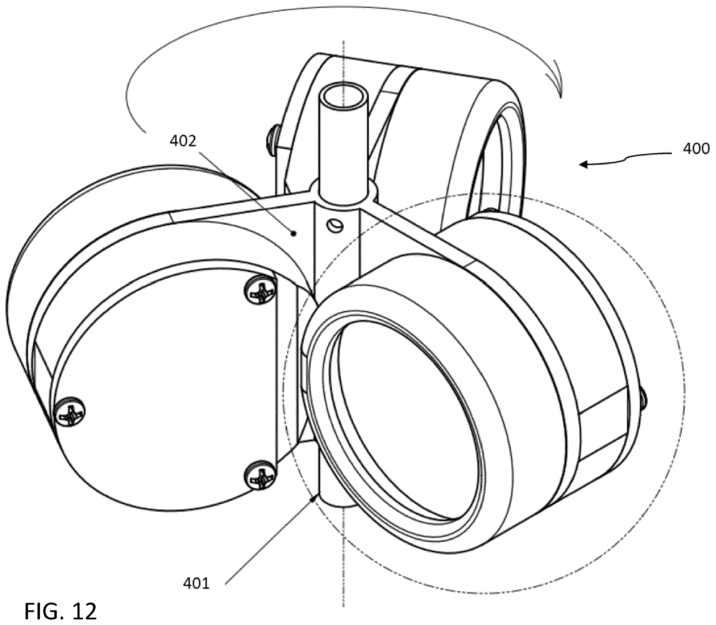

The illumination layer 1001a may comprise a turret, see Figs 12-15, comprising one or more or a plurality of fluorescence light sources. Traditional fluorescence microscopes usually have bulky and inflexible light sources. These usually make it complicated to transport them from one location to another in addition to having to follow a usually lengthy procedure to set these light sources up. In Fig. 12 is a schematic drawing of a three-armed turret 400. The turret body 402 may turn around its shaft 401 in either direction; clockwise or counterclockwise. Each arm holds an assembly of electronic and optical components including a light source, a collimating lens and an excitation filter. The components of this assembly may be held together using appropriate mechanical holders and hence they move together as a unit.

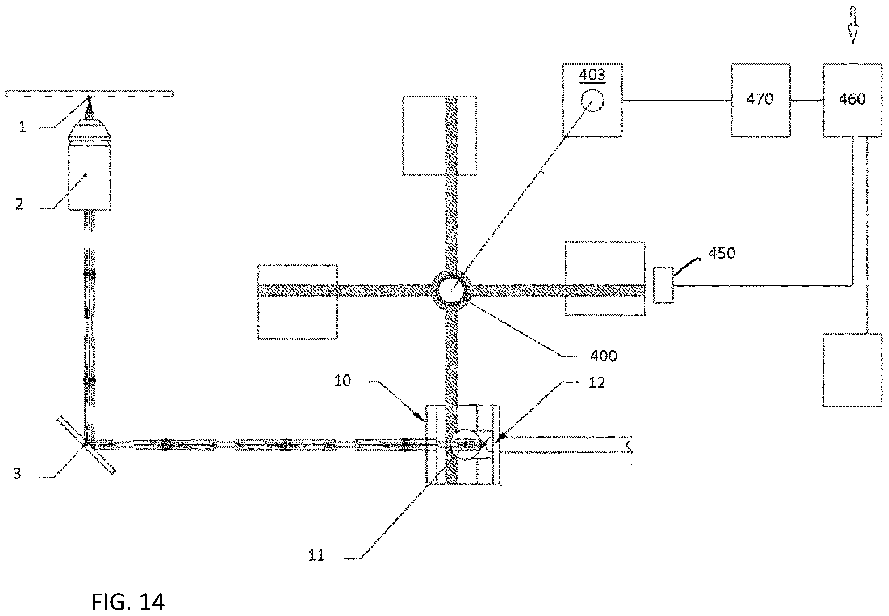

In Fig. 14 is shown a schematic drawing of a rotational moving structure with n number of arms. Each arm is holding a light source 12, an optical lens 11 and/or mirror and an excitation filter 10 at least. The turret 400 stops at specific positions at which the light it emits from one or more of its arms is coupled collinearly with the light path that would eventually be incident on the fluorescent sample 1. In this case, the light emitted from one arm of the turret 400 is reflected from a dichroic mirror 3 and then being focused through the objective lens 2 onto the fluorescent sample 1. The light source 12 in this example receives its energy from an electric power supply. The exact position of the turret 400 may be monitored using a position sensor 450 which sends this information to a processing unit 460 that decides based on user input and saved algorithms to start, stop, accelerate, decelerate, or maintain a constant speed of the turret 400. Once the processing unit reaches a decision, it sends it to a controlling element 470 that in turn controls the turret's motion and direction.

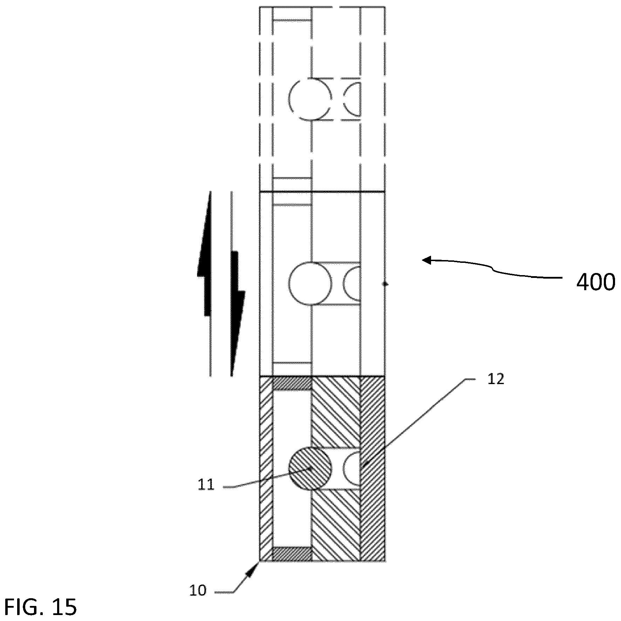

Alternatively or in addition to being rotationally moveable, the turret 400 may comprise a translational moving structure of n number of units as shown in Fig. 15. The structure may move in a straight line in either direction. Each unit may include at least an integrated light source 12, optical lens 11 and/or optical mirrors and a filter set 10.

The turret is not limited to accommodating only three assemblies, indeed any number of assemblies, such as 1-10 assemblies, can be accommodated by the turret. Although, the LEDs can be of any color and wavelength, typically they would be chosen to emit light in the UV, blue and/or amber wavelength bands. Any number of LEDs can be incorporated into the assemblies and the assemblies can have the same number or a different number of LEDs than other assemblies.

The fluorescence light sources of the illumination layer 1001a may be arranged to rotate, see Figs 12-14. Each turret comprised in the illumination layer 1001a comprises at least one fluorescence light source, and preferably a plurality of fluorescence light sources, such as two or more fluorescence light sources. Each fluorescence light source may comprise an integrated fluorescence light source comprising one or more light source, an optical lens and/or mirrors, and/or a filter. In embodiments, the fluorescence light sources are preferably Light Emitting Diodes (LEDs). The fluorescence light turret may be arranged to continuously rotate, thus enabling a rapid control of the fluorescence lights.

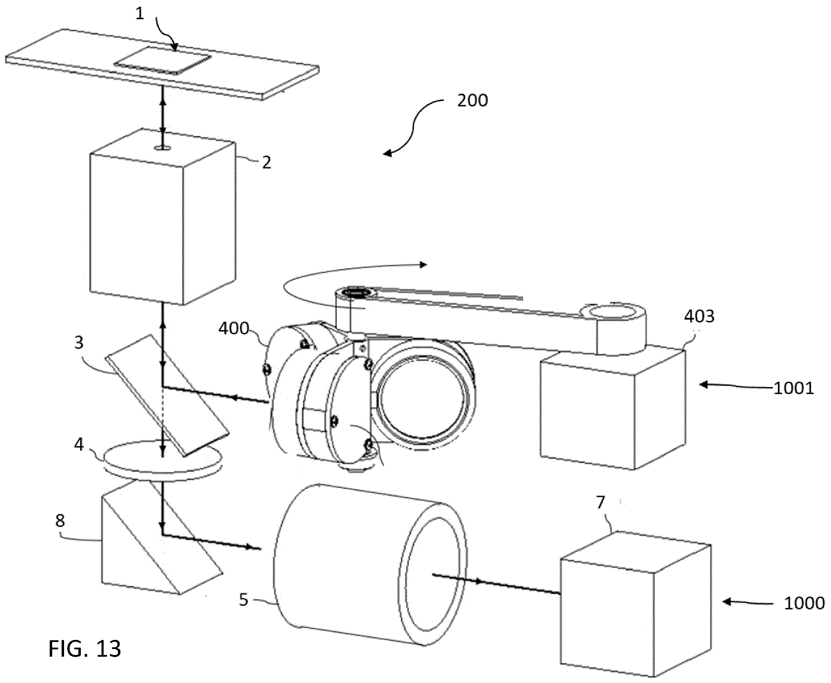

Fig. 13 is a schematic drawing of a compact fluorescence microscope 200 incorporating the rotational moving structure of Fig. 12. In Fig. 13, the stepper motor 403 drives the turret 400, stopping at a precise position where the light coming out of the light source after being collimated and filtered in a turret arm is being coupled collinearly with the light path that will eventually be incident on the fluorescent sample 1. The light beam coming out of the turret arm is being reflected from the dichroic mirror 3 and then being focused by the objective lens 2 onto the sample 1. The sample 1 absorb this light and after a brief amount of time will fluoresce and emit light at lower energy. This fluorescent light will be collected by the objective lens 2, which then will be transmitted through the dichroic mirror 3 to the emission filter 4 beneath it. In this example, the fluorescent light is then being reflected from a right-angle mirror 8, and finally being focused by a tube lens 5 onto a camera's image sensor 7. The three-armed turret 400 is providing a 3-channel fluorescence capability to this compact fluorescence microscope 200 in this case.

The turret 400 may stop at specific positions at which the light it emits from one or more of its arms is coupled collinearly with the light path that would eventually be incident on the fluorescent sample. The light emitted from one arm of the turret 400 may be reflected from a dichroic mirror 3 and then being focused through the objective lens 2 onto the fluorescent sample 1. The light source may receive its energy from an electric power supply. The exact position of the turret may be monitored using a position sensor 450, see Fig. 14, which sends this information to a processing unit that decides based on user input and saved algorithms to start, stop, accelerate, decelerate, or maintain a constant speed of the turret. Once the processing unit reaches a decision, it sends it to a controlling element that in turn controls the turret's motion and direction.

The rotational moving structure may alternatively be used in a confocal microscope setup. The turret can turn around its central shaft and is controlled in its motion and direction by a motor connected to it using a driving mechanism like a timing belt. Once the turret is at a right position, the light beam coming out from one of its arms (in the case of confocal microscopy, the light source is usually a laser light source) is coupled collinearly with the light path that ultimately is incident on a fluorescent sample. In this case, the laser light coming out from one of the turret's arms goes through a pinhole-aperture, then being focused using an objective lens on the sample. The fluorescent light coming out of the sample then is collected using the objective lens, transmitted through the dichroic mirror, goes through the emission filter and another pinhole-aperture structure finally hits a photomultiplier detector. Again, the motor can drive the turret to rotate to one of three precise positions -in this case- providing the possibility of 3-channel fluorescence microscopy.

The illumination layer 1001a of the cell monitoring system may further comprise a phase contrast unit, comprising a phase contrast lamp. Said phase contrast unit 1001b may be arranged in an upper part of the gantry frame structure 30a, 30b, in parallel with the first extended member and separated from the casing 20 by legs of the frame structure extending upwards orthogonally from the casing. The arrangement of the illumination layer 1001a, 1001b of this alternative embodiment enables illumination of a sample 1 on the sample tray 22 from above by the phase contrast lamp 1001b, and/or from below with the fluorescence light source or turret.

The detection layer 1000 may comprise folded optics, in order to enable the compact design of the cell monitoring system of the present disclosure.

The detection layer 1000 and the illumination layer 1001a may be arranged in an optical cube. Such optical cube houses (a) light source(s), sensors for retrieving the images of the sample 1, optical lens and/or mirrors, and filter and (a) dichroic mirror(s). The fluorescent light may be emitted in a light path that is angled towards the objective lens and the sample tray by the dichroic mirror. As the light emission is stopped, the cells present on the sample tray will emit fluorescence light back via the same dichroic mirror and to a retrieval device. Hence, the optical cube according to this embodiment may be the compact fluorescence microscope 200 described above. The illumination layer 1001a is thus integrated in a microscope together with the detection layer 1000, positioned on the gantry frame structure 30a, 30b, under the sample tray 22. The illumination layer may additionally comprise a phase contrast unit 1001b, which may be positioned over the sample tray 22 on an upper portion of the gantry frame structure 30a, 30b (outside the optical cube), as previously disclosed.

The sample tray 22 is preferably removable. Thus, one or more cell culture vessels may be placed on a sample tray 22 and kept on said tray in a cell incubator such that it is possible to remove an entire tray with multiple cell culture vessels from an incubator and placing said tray on the cell monitoring device in order to scan all of the vessels thereon, without the need of moving the vessels one at a time. Thus, the exact position of samples 1 on a sample tray 22 is not disturbed. This enables a more efficient and exact tracking and monitoring of cell cultures.

Aluminum construction of the casing provides for better heat dissipation.

The cell monitoring system 3000 may be used for monitoring cells in connection with bioprinting and/or biodispensing of live or living cells. The cell monitoring system thus relates to, for instance, monitoring of dissociating cells, dissociating two or more cell types, resuspending cells, loading cell suspension for dispensing, counting cells in known dispensed volumes, loading cells in a hydrogel, monitoring growth of cells in an incubator, monitoring cell proliferation, cell spheroid formation, cell migration, and/or monitoring of cell viability and distribution in bioprinted constructs. Furthermore, the cell monitoring system 3000 may relate to imaging of the cell culture vessels with a predefined frequency, in order to be able to monitor the development of a cell culture without having to remove the cell culture vessel from an incubator. Thus, the monitoring will not warrant interrupting the cell culturing conditions by removing the cell culture vessel from the incubator such that it is possible to grow cells in the incubator and follow growth in the incubator using the cell monitoring system of the present disclosure until cells are ready for further processing. It is also possible to follow progress and determine cell confluence over time. Using the present cell monitoring system 3000 it is possible to follow the progress of a cell culture over time using phase contrast/bright field microscopy as well as fluorescence microscopy.

The cells may be stained with any cell tracker reagent for the purposes disclosed above.

The present disclosure further provides for a method of monitoring and/or examining cells comprising disposing cells in a plurality of cell culture vessels; placing the vessels on a sample tray 22; placing the sample tray in a cell monitoring system 3000 according to the above; placing said cell monitoring system in a chamber with a regulated environment for cell culturing purposes; imaging the cells in each vessel automatically in the chamber using the cell monitoring system.

A computer implemented method may be used for control of said cell monitoring system, said method comprising control of an imaging system to read and monitor a cell culture vessel positioned on a sample tray in a predetermined pattern. Furthermore the reading and monitoring of the cell culture vessel may comprise acquiring images from the cell monitoring system and possibly storing at least a portion of the acquired images and/or data locally and/or uploading at least a portion of the images and/or data to the cloud or other remote server, wherein the images may be stored on a server or in the cloud for archival purposes and/or for later processing.

The control of the imaging system 300 in the predetermined pattern may comprise control of movement of a gantry frame structure holding the imaging system 300 in accordance with the predetermined pattern. Thus, it is the actuating of the movement members that is controlled.

The computer implemented method may further comprise a step of checking the cell monitoring system for operational issues including but not limited to mechanical drift and/or system power loss and/or environmental factors. The computer implemented method may relate to detecting unintentional or unwanted movement of a cell culture vessel on a sample tray, or any other manipulation of the placement of cell samples on the sample tray. The computer implemented method may further relate to detecting power failure for the cell monitoring system and/or the incubator wherein the cell monitoring system is located. The computer implemented method may also relate to detecting changes of temperature, air humidity, air composition etc. within the incubator. For instance, it will be possible to detect if a door to an incubator has not been closed properly. It may also be possible to detect if the door has been opened thus disturbing an ongoing experiment.

A computer implemented method may be performed in a remote server such as a cloud server, for monitoring a cell culture vessel positioned on a sample tray, said method comprising receiving images of the cell culture vessel acquired from a cell monitoring system in a predetermined pattern, and storing and/or processing the received images.

Furthermore the present disclosure provides for a computer program comprising computer-executable instructions, which when the program is executed by a computer, cause the computer to carry out the method according the above. The computer-executable instructions can be programmed in any suitable programming language, including JavaScript, C, C#, C++, Java, Python, Perl, Ruby, Swift, Visual Basic, and Objective C.

Also provided herein is a non-transitory computer-readable medium (or media) comprising computer-executable instructions, which when executed by a computer, cause the computer to carry out the method according to the above. As used in the context of this specification, a "non-transitory computer-readable medium (or media)" may include any kind of computer memory, including magnetic storage media, optical storage media, nonvolatile memory storage media, and volatile memory. Non-limiting examples of non-transitory computer-readable storage media include floppy disks, magnetic tape, conventional hard disks, CD-ROM, DVD-ROM, BLU-RAY, Flash ROM, memory cards, optical drives, solid state drives, flash drives, erasable programmable read only memory (EPROM), electrically erasable programmable read-only memory (EEPROM), non-volatile ROM, and RAM. The non-transitory computer readable media can include one or more sets of computer-executable instructions for providing an operating system as well as for implementing the methods of the invention.

### CASING

The outer casing 20 is the main body of the device used in the system, onto which everything else is mounted. The outer casing 20 needs to embody the desired exterior design and allow for the necessary movement of the gantry and the detection layer 1000, while at the same time being as compact as possible and easy to manufacture.

It is possible to make the bottom casing out of four welded sheet metal parts. The split line will in this case not only be an aesthetic feature, it will also allow for the integration of the interface surface for the gantry system and allow for easier manufacturing. The holes for attaching the gantry rails can be laser cut and threaded to achieve precise alignment and parallelism. Two flanges from the split line part can be bent up to serve as the base on which the microplate stage will rest. According to other embodiments, those two surfaces, as well as the rail mounting surfaces, can be made as separate parts and welded on the inside of the casing walls. However, by laser cutting the parts as one-piece, accuracy will be kept high and the part amount kept low.

### THE GANTRY SYSTEM

A gantry system can be configured to have one or more extended member 23a, 23b in a latitudinal direction (X axis), resting on one or more and preferably two extended members 40a, 40b in a longitudinal direction (Y axis) and carrying one or more extending member 30a, 30b in an orthogonal direction (Z axis) extending away in a direction perpendicular to both **the latitudinal** direction and the longitudinal direction. By being designed in such way, it deals with the issues of Cartesian systems, such as being able to transport high loads long distances with fine precision. However, gantries do generally suffer from being less compact since the load has to be situated within the space covered by the gantry mechanisms. The gantry's working space, that is the space reachable by the workpiece, is therefore always smaller than the total space occupied by the gantry. By placing the gantry system in relation to the detection layer 1000 and the illumination layer 1001a, 1001b as specified in the present disclosure, a more compact solution can be achieved.

A cost-effective method to achieve planar motion with high precision is to use a combination of stepper motors, toothed pulleys and belts. By controlling the motors with drivers that allow micro-stepping, a precision of at least ±10 microns can be achieved. To allow synchronization of the movement of the detection layer 1000 and an illumination layer 1001a, a two shafted motor can be used to mechanically connect them.

For focusing, a movement resolution of 1 micron is desirable in order to allow monitoring of a Z-stacking functionality of mammalian cells. A theoretical resolution of less than 1 micron can be achieved by using a lead screw stepper motor with a fine pitch in combination with micro-stepping.

The developed system 3000 then utilizes 35% of its occupied area for viewing cells, while the rest of the area is used for mechanical components to allow the desired movement.

### XY-GANTRY

The focus was then on adapting the chosen XY-gantry concept to allow the detection layer 1000 to move in a compact yet rigid manner, as well as integrating the gantry with the outer casing 20.

The XY-gantry system mainly includes extended members in the form of linear guides mounted to a sheet metal frame. The material selection for the frame structure was based on similar grounds as for the outer casing, but with the added criteria that stiffness is preferred due to the rapid movements of the gantry system. This criterion even further strengthens the choice of a stainless steel alloy above an aluminum alloy since Young's modulus is higher for steel than aluminum. The frame structure was first designed in CAD as one part. However, in order to ease the manufacturing and assembly of the top casing, the frame structure was divided into two parts. With an open geometry in the top, all parts attached to the lower portion of the frame structure can be handled easier during assembly. This enabled the main assembly direction to be from above since parts attached to the upper portion of the frame structure could be mounted before attaching the top and the bottom parts of the frame together.

Two dual shaft stepper motors with associated brackets together with shafts, pulleys, pillow blocks and belts form a linear motion setup that enable the optics module and the phase contrast lamp to move in XY. Of-the-shelf components were used to as great extent possible. However, the pillow blocks were custom made and the shafts cut to the correct length, both in order to fit the application. The shafts are used to transfer the sideways motion up to the phase contrast lamp and the pillow blocks can be used to keep the long shafts stable.

### PHASE CONTRAST CASING

The main function of the Phase contrast casing is to cover the frame and electronics and still allow the phase contrast lamp to lighten the cell samples. The Phase contrast casing together with the outer casing are responsible for communicating the desired product expressions. Therefore, the split line and the radii of the intended design should be integrated without compromising its ease of assembly and disassembly. The electronics and mechanisms covered by the casing would have to be mounted first, since it would be tricky to reach inside the slim casing and mount the components which are closely packed with narrow margins. The top lid and bottom cover can be made removable to allow for both easy assembly and replacement of faulty parts.

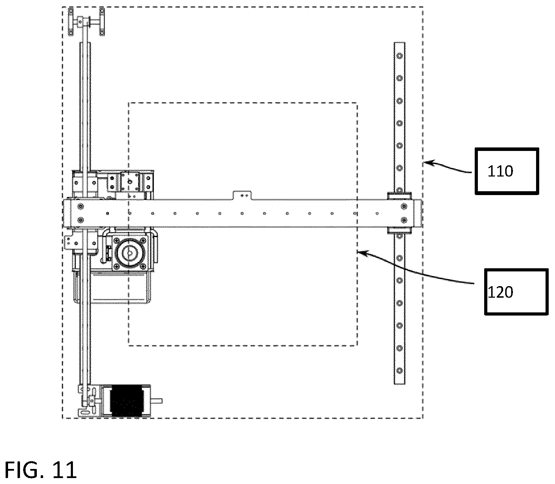

Returning to Fig. 10, an embodiment of the cell monitoring system 3000 is shown including a detection layer 1000 being attached to a linear guide 23b that is mounted to a gantry frame structure 30a, 30b, where the linear guide 23b allows for movement in a latitudinal direction. The frame structure is attached to one or more extended members, such as a pair of second extended members, in the form of linear guides 40a, 40b that together allow planar movement in a longitudinal direction. The planar movement is generated by stepper motors 50, 90 that use pulleys 60 in combination with belts 70 and belt mounts 80. By using a two-shafted motor 90 synchronization of the movement of the detection layer 1000 and illumination layer 1001a attached to the lower portion of the frame structure can be achieved. In such an embodiment the imaging system 300 (comprising the detection layer 1000 and the illumination layer 1001a) may be the compact fluorescent microscope unit 200 shown in Figs 1-8. In an alternative embodiment a phase contrast unit 1001b may additionally be attached to the upper portion of the frame structure 30a, 30b.. The orifice 130 is where a sample tray will be positioned. Fig. 11 shows a top view of the gantry system and discloses the occupied area 110, which outline also defines parameters for a housing/casing in one embodiment, and reachable area 120, where the reachable area 120 is the area that can be reached and monitored by the detection layer 1000 and illumination layer 1001a, 1001b. The reachable area 120 is thus where the cell culture vessels should be placed on a sample tray to be placed in the cell monitoring system of the present disclosure. The reachable area may correspond to 35% of the entire area, as discussed above.

### ACCURACY AND REPEATABILITY

The requirements set for the system regarding the XY motion precision, were that it should be able to take steps as small as 10 µm, have an accuracy of less than ±5 µm for all travels and have a repeatability of less than ±5 µm for all travels. With proper motion precision, the system can enable precise inspection of cell clusters in large magnifications, time-lapse imaging by returning to the very same area over time and no loss of data. When taking steps of 100 µm each time, the H-gantry had an overall accuracy within the span of ±14 µm. The values varied unpredictably within this span, with an average of ±6 µm. The unpredictable behavior was most likely caused by the low rigidity of the build, which could cause one step to be 14 µm too short and next step to be 14 µm too long, not following any pattern. Similar characteristics were prominent when taking 10 µm steps. The accuracy span was better in this case, if counting the absolute length, at ±5 µm, but was worse if the percentage of deviation is considered.

The same backlash characteristics could be seen in the Double belt system, but not to the same extent. This was probably because micrometer stretch of the long H-bot belt added to the deviations. At a 100 µm step length, the double belt had an accuracy within the span of ±10 µm. The double belt also provided values that varied unpredictably within this span, with an average of ±5 µm. When taking 10 µm long steps the overall accuracy was within the span of ±4 µm. No matter the step length, the double belt performed slightly better than the H-gantry due to having less belt stretch rebound.

The double lead screw system did, like the previous two systems, show tendencies of backlash characteristics, but again not to the same extent as it was caused by the nut and not a belt. When moving 100 µm at a time the double lead screw system had an accuracy within the span of ±4 µm. The values varied within this span as well, with an average of ±2 µm. At a 10 µm step length the accuracy for the lead screw system was within the span of ±2 µm. The lead screw system performed significantly better than both belt systems.

In terms of repeatability for the three systems, their performance followed the same pattern as for the accuracy. The H-gantry performed the worst of the three with a repeatability within the span of ±3 µm, but with three individual unexplainable values, out of 140 values, with a deviance of -8 and +6 µm. The double belt performed slightly better, with a repeatability within the span of ±2 µm in which all values consistently were. The lead screw system performed the best, having a repeatability within the span of ±1 µm, but with three out of 140 values being inconsistent at ±2 µm.

### SPEED

After establishing the accuracy and repeatability reference values for each system, they were tested in the same way but in gradually increasing speeds. The reference values were measured at a speed of 3000 mm/min, which was the standard unit in the firmware. At 5000 mm/min the lead screw system started showing worse performance, now with a repeatability at ±3 µm. At higher speeds it started jamming and travelled with an occasional jerking motion due to the combination of acceleration and friction in the threading. Both belt systems could move at speeds up to 9000 mm/min without significant performance loss, with H-gantry being able to move slightly faster at up to 12000 mm/min. This is in line with what is commonly known, that belts are easier to move faster than lead screws. However, further information was needed at this point to verify what movement speeds are desired and how significant these differences are in the grand scheme of things. This test did, however, show what potential the different systems had regarding the speed.

### COMPACTNESS

The H-gantry system was relatively compact in both height and length, thanks to X and Y motion working in the same plane and the motors sharing the same wasted space. It was, however, less compact in width, due to the pulley wheels which bend the belt along the moving axis. The double belt and the double lead screw systems were less compact in height, due to their X and Y axes being stacked on top of each other. On the other hand, this made them more compact in width and depth.

Above their general compactness, details tied to the parts used which compromised compactness were observed as well. Such details were using a more compact anti-backlash nut for the lead screws, aligning the belt or lead screw over the carriage and not beside it, using more customized mounts for all the motors to optimize their fitting, using slimmer multipurpose attachments on all the carriages to avoid using multiple attachments, having the motors on the same side of the gantry to not accumulate wasted space, using a less space-consuming belt attachment and placing the motors more efficiently to waste space in the least critical dimension. These results were used as guidance in the upcoming improvements.

When assembling the concepts and having a first-hand experience with the mechanical components necessary to make the system possible to make, it was realized that making the system for only one microplate would be wasteful in terms of the area covered by the machine. When optimizing the double belt concept, for example, in terms of compactness, the dead space around the microplates required to fit the motors and other mechanical components add an extra 130 mm to the width and 117 mm to the depth. The viewing area for one 96-microplate measures 106 x 70 mm, which would make the machine theoretically take up a total of 236 x 187 mm, meaning it would make use of 16.8% of its total occupied area. For six 96-microplates, the viewing area become 245 x 272 mm, making the total occupied area by such a machine 362 x 402 mm. That results in a total of 45.7% of its occupied area which is directly used for cells, meaning a higher throughput per unit of area taken. This would be more beneficial in the laboratory where the footprint of each product is important, which is why it was decided to design the product for six microplates. Designing the product to handle, for example, four microplates was deemed as pointless. It would make the machine slightly smaller but would not allow for having more than one machine in the incubator at the same time, thus reducing the number of microplates able to be analyzed by a live-cell imaging system in the same incubator.

### EASE OF ASSEMBLY

When assembling the different prototypes, their ease of assembly was experienced first-hand. This both pointed out how the concepts compared with each other and what detail aspects in general there were to look out for in these builds. The H-gantry system was perceived to be the least easy to assemble and the double lead screw system instead the easiest to assemble. The H-gantry had the most parts in total due to its belt being winded around eight points, consisting of four toothed pulleys and four toothless pulleys. The axis of all eight were pointing vertically which made the winding of the belt tricky, as the belt easily fell of some of the pulleys if not kept tensioned enough while at the same time attaching the belt ends to the workpiece. In general, mounting several pulley wheels and synchronizing them took time. Mounting a belt took time as well since it needed to be tensioned and attached to the workpiece at the same time. A solution which would enable easy mounting and tensioning of the belts was viewed as highly beneficial due to the hardships experienced. These factors, and the fact that the belt systems required more parts, were reasons for why the double lead screw system was the easiest to assemble. It needed to have the motors attached to the frame and then the backlash nuts to be attached to the carriages for it to work properly. Some general considerations regarding the ease of assembly for all three systems were observed. One such consideration is the use of nuts, screws, washers and spacers. Such parts are small and difficult to handle, and when fewer were used the system was easier to assemble. Spacers and washers were used mainly because most parts used in the builds were standardized prototyping parts which were not made to fit these specific assemblies. By having more fitted and aligned parts, with the proper hole dimensions, the use of spacers and washers could be reduced heavily. The nuts were problematic since they need clamping while screwing, which created tricky and time-consuming two-handed operations. Improvements that were discussed were having a hexagonal cut around screw holes which would make the part clamp the nut automatically. An alternative would be to remove the nuts completely and instead have threaded holes in the parts. Regarding the screws, it was tricky to keep track of and use too many kinds of screws in the same system. Improvements discussed were minimizing the amount of different screw drive types and sizes used, to minimize tool change and minimizing the amount of different screw lengths and sizes, to have few kinds of screws, each used in many places, rather than having many kinds of screws, each used in few places.

### RIGIDITY

It was observed that having a rigid system would be key to achieve high precision. Since the systems consisted of many standardized parts assembled with screws, instead of fewer custom-made parts, there was an inherent underperforming rigidity in the systems. An example is the rectangular frame which consisted of four straight aluminum profiles, connected in the corners with L-shaped brackets. If the frame instead was milled from one solid piece of aluminum, it would have been considerably more rigid. The low rigidity became obvious when pushing and the axes back and forth by hand; it caused the whole frame to flex to a degree visible with the naked eye. When driving the systems with the motors the applied force is less, which is why any flex was not observed, although it likely had an impact on the sometimes unpredictable values.

The two points where the moving axis is attached to the two stationary axes were also critical points in terms of rigidity, since the moving axis needs to stay perpendicular to the other axes during movement. The H-gantry system helped stabilizing this with the belt winding, but the issue still remained. For the double belt and double lead screw systems the rigidity in that attachment became extra problematic, since the moving axis was only driven on one side, creating a torque in that attachment due to its moment of inertia. The problem lies in the clearance between the rail and the sliding carriage, which allows the carriage to skew some, causing the undriven end of the moving axis to lag, which in turn causes the axes to not be perpendicular during motion. This effect is like the well-known situation of a jamming bureau drawer which seems to jam more the more one push it, hereon referred to as "the sticky drawer effect". This was also thought to have impact on the sometimes unpredictable, worse values which occurred during the testing and an overall effect on motion precision. The motion precision was also seen to be considerably worse further from the driven end of the moving axis, compared to near the driven end.

The materials used in the parts were also a factor which was obvious during testing. Some parts had been 3D printed in plastic to speed up the prototyping process and keep costs to a minimum, which lowered the rigidity of the systems. This implied that using plastic in parts which influence the system rigidity is a bad idea.

### SUMMARY AND EVALUATION OF FIRST ITERATION OF CONCEPTS

The differences between the three systems in the performance and the other evaluated aspects were small, but they were nonetheless differences indeed. Out of the three concepts, the H-gantry performed the worst in most aspects. Its motion precision was not as good as the other two concepts, and on top of that the H-gantry did not show any major advantages compared to the other systems apart from being faster and being more compact in the Z direction. The extra speed and the compact height did not, however, weigh up the drawbacks of having less precision, being less easy to assemble and having a less compact width. Both the double belt and the double lead screw concepts performed better in most aspects, and especially in the motion precision, which is why the H-gantry was discarded at this point.

The double belt and the double lead screw concepts both operated within the limits in these tests and showed advantages in different areas. The double lead screw concept was easier to assemble and moved with higher precision. The double belt concept, however, moved with a higher top speed and would, as previously established, be cheaper to build. It would also be easier to integrate with the phase contrast motion compared to the double lead screw concept, which would require either a third motor or a customized lead screw with cogs at the base to transfer the motion to the phase contrast with a belt. Those two concepts had their benefits and drawbacks and were therefore not discarded at this stage, as further improvement and testing was needed.

### TRAVEL SPEED

The travel speed was measured in tests where a scan was simulated. A 20x objective was assumed, which would require 16 images in a 4x4 grid to cover roughly the whole well of a 96-microplate, in order to simulate a real scanning situation. The tests were performed with an added mass of 1.8 kg to the gantry, to simulate the optics unit, at both 3000 and 6000 mm/min, to see how the total time was related to the input speed considering all the accelerations and decelerations that came with each image. The summarized values from the travel speed tests are presented in Tab. 1.

**Tab. 1 - Travel speed test. Note that the lead screw concept could not move faster than 3900 mm/min without jamming.**

| | **Speed** *(mm*/*min)* | **Total scan time** *(mm:ss)* | **Total exposure time** *(s)* | **Total travel time** *(mm:ss)* |
|---|---|---|---|---|
| Lead screw | 3000 | 04:33 | 23 | 04:10 |
| Lead screw | 3900 | 04:22 | 23 | 03:59 |
| Belt | 3000 | 04:20 | 23 | 03:57 |
| Belt | 6000 | 04:02 | 23 | 03:39 |

The belt concept travelled faster than the lead screw concept, although the times did not differ too much when travelling with a speed of 3000 mm/min. The fact that there was a difference was, however, noteworthy. The difference was believed to be caused by the friction between the lead screw threading and the nut, decreasing each acceleration. The friction between the threading and the nut was especially remarkable when moving at 6000 mm/min; the lead screw simply could not do it. This had to do with the fine angle of the threading needed for the step resolution, in combination with the added weight and the strength of the motor. The lead screw system was tested at 5000 mm/min and 4000 mm/min, but the jamming was still occurring. The fastest speed the lead screw system could travel at under the circumstances of this test was at 3900 mm/min, which resulted in the belt system being 20 seconds faster for each microplate in terms of travel speed. That would mean two minutes slower for each tray of six microplates.

Another interesting result to point out is that even when the speed was doubled, the travel time only decreased a little. This was likely caused by a combination of the time required to reach full speed and the short distances travelled. At a certain point the increased speed did not matter for this scan pattern, since the optics approached its final position and started decelerating before reaching its full speed. It was noticed for the belt system that travel speeds above 3000 mm/min only improved the total travel time slightly. This indicated that the maximum speed, which could be made use of between each image in the same well, had been reached. The slight improvement in time when comparing, for example, the belt concept at 3000 mm/min and at 6000 mm/min came from the longer distance travelled between each well, which let it reach a higher speed and thus made it gain from being faster. This showed that the travel speed is not everything when it comes to the scanning time; the scan pattern is also a key factor. The same characteristics were thought to likely be occurring for a 4x and 10x objective as well, since they would require a 2x2 or a 3x3 grid to capture most of the well. The many short distances travelled were therefore a limiting factor which resulted in none of the systems being able to reach their full potential speeds.

### SUMMARY AND EVALUATION OF SECOND ITERATION OF CONCEPTS

To handle the sticky drawer effect, there were no differences between the solution for the lead screw and the belt concept. Introducing an extra carriage proved to be a viable solution for both concepts. For integrating the phase contrast motion the best solution for the belt concept, having a double-shafted motor connected to two belts, was deemed superior to the best solution for the lead screw concept, which was having a belt to transfer the motion. The belt concept proved to handle the weight of the optics unit better and thus provided faster scans than the lead screw concept. The lead screw concept could have been equipped with a stronger motor and a screw with longer lead to overcome the issues of friction and jamming in order to achieve higher speeds. That would, however, also lower motion precision and the motor would create more heat, meaning the lead screw concept would lose its main benefits. The lead screw concept had better motion precision than the belt concept, although the belt concept performed within the set requirements as well. The belt concept would cost less to build, but both concepts would be within budget. The lead screw concept was easier to assemble when only considering the XY motion of the optics unit, but when the whole systems with the phase contrast mechanism included were considered, no concept was easier to build than the other since they were problematic in different aspects.

All these factors (Tab. 2) combined were the basis for why the lead screw concept was discarded at this point and the belt concept was chosen as the one to continue developing. Both concepts performed quite well, but the lead screw concept showed no advantages over the belt concept except for being more precise, an advantage which did not matter in this case because of the belt concept performing well enough.

**Tab. 2 - Summary of benefits and drawbacks with each concept**

| | Lead screw concept | Belt concept |
|---|---|---|
| Sticky drawer effect | 0 | 0 |
| Phase contrast solution | 0 | + |
| Scan speed | 0 | + |
| Motion precision | ++ | + |
| Price | 0 | + |
| Ease of assembly | 0 | 0 |

## Claims

1. A cell monitoring system (300) for automatic cell monitoring comprising
an outer casing (20),
a sample tray (22) adapted to receive a sample (1), said sample tray (22) being positioned within the outer casing (20),
a gantry system (21) arranged at least partly within the outer casing (20), said gantry system comprising a framework of connected extended members, said framework comprising
a first extended member (23a 23b) being configured to extend in at least a latitudinal direction, and
at least one second extended member (40a, 40b) being configured to extend in a longitudinal direction, said longitudinal direction being perpendicular to said latitudinal direction, wherein the first extended member (23a, 23b) rests on the at least one second extended member (40a, 40b) and
a gantry frame structure (30a, 30b) extending along an orthogonal direction being perpendicular to the latitudinal direction and the longitudinal direction, wherein the first extended member (23a, 23b) carries the gantry frame structure (30a, 30b),
at least one movement member (50, 60, 70, 80, 90),
an imaging system (300) arranged on the gantry frame structure,
wherein the imaging system (300) is a compact fluorescence microscope unit (200) for imaging fluorescent samples (1), comprising:
a. an illumination layer (1001) comprising more than one light source (12, 12a, 12b, 12c), more than one optical lens (11, 11a, 11b, 11c), more than one excitation filter (10, 10a, 10b, 10c), and beam combining optics (9, 9a 9b);
b. one or more dichroic mirror(s) (3, 3a, 3b, 3c);
c. an objective lens (2);
d. a detection layer (1000) comprising an image sensor (7), one or more emission filter(s) (4), a tube lens (5), and/or one or more optical mirror(s) (6, 6a, 6b);
wherein the one or more dichroic mirror(s) (3, 3a, 3b, 3c) is/are arranged to:
transmit light originating from the illumination layer (1001) and pass through the objective lens (2) to illuminate the sample (1); and
reflect fluorescent light emitted by the sample (1) and collected by the objective lens (2) toward the detection layer (1000), and wherein
the gantry frame structure (30a, 30b) comprises an internal orifice (130) enabling the sample tray (22) to be positioned within said orifice (130), and
said detection layer (1000) is arranged within the outer casing (20) and attached to a lower portion of the frame structure, and under the sample tray (22), and the illumination layer (1001a) is attached to the frame structure of the gantry system, such that the illumination layer (1001a) and the detection layer (1000) are synchronically movable in a planar movement in response to actuation of said at least one movement member (50, 60, 70, 80, 90), wherein
a control unit for controlling the actuation of the movement members (50, 60, 70, 80,90) is provided, wherein the control unit enables movement of the gantry frame structure (30a, 30b), the detection layer (1000) and the illumination layer (1001) in a predetermined pattern by actuating of the movement member.

2. The cell monitoring system (3000) of claim 1, wherein the compact fluorescence microscope unit (200) comprises an epifluorescence microscope.

3. The cell monitoring system (3000) according to claim 1 or 2, comprising a processing unit to collect and process images retrieved from the imaging system (300).

4. The cell monitoring system (3000) according to any one of claims 1-3, wherein the movement members (50, 60, 70, 80, 90) comprise motors, belts, shafts, pulleys and pillow blocks.

5. The cell monitoring system (3000) according to any one of claims 1-4, wherein the gantry system is driven by a double belted configuration mechanism.

6. The cell monitoring system (3000) according to claim 5, wherein the double belted configuration mechanism is a combined belt mount and tensioning mechanism comprising a double shafted rotational motor in combination with belts.

7. The cell monitoring system (3000) according to any one of claims 1-6, further comprising a damping system.

8. The cell monitoring system according to any of claims 1-7, wherein the illumination layer (1001a) is arranged in connection with the detection layer (1000), and attached to a lower portion of the frame structure.

9. The cell monitoring system (3000) according to any one of claims 1-8,wherein the detection layer (1000) comprises folded optics.

10. The cell monitoring system (3000) according to any one of the claims 1 to 9, wherein the control unit enables the imaging system (300) to read and monitor any samples (1) positioned on the sample tray (22) in a predetermined pattern.

11. The cell monitoring system (3000) according to any one of claims 1-10, wherein the sample tray (22) is removable.

## Patentansprüche

1. Zellüberwachungssystem (300) zur automatischen Zellüberwachung, umfassend
ein Außengehäuse (20),
eine Probenschale (22), die zum Aufnehmen einer Probe (1) ausgelegt ist, wobei die Probenschale (22) innerhalb des Außengehäuses (20) positioniert ist,
ein Portalsystem (21), das mindestens teilweise innerhalb des Außengehäuses (20) angeordnet ist, wobei das Portalsystem ein Gestell aus verbundenen, verlängerten Elementen umfasst, wobei das Gestell Folgendes umfasst
ein erstes verlängertes Element (23a, 23b), das so konfiguriert ist, dass es sich mindestens in einer Breitenrichtung erstreckt, und
mindestens ein zweites verlängertes Element (40a, 40b), das so konfiguriert ist, dass es sich in einer Längsrichtung erstreckt, wobei die Längsrichtung senkrecht zur Breitenrichtung verläuft, wobei das erste verlängerte Element (23a, 23b) auf dem mindestens einen zweiten verlängerten Element (40a, 40b) aufliegt, und
eine Portalrahmenstruktur (30a, 30b), die sich entlang einer orthogonalen Richtung erstreckt, die senkrecht zur Breitenrichtung und zur Längsrichtung verläuft, wobei das erste verlängerte Element (23a, 23b) die Portalrahmenstruktur (30a, 30b) trägt,
mindestens ein Bewegungselement (50, 60, 70, 80, 90),
ein an der Portalrahmenstruktur angeordnetes Bildgebungssystem (300),
wobei das Bildgebungssystem (300) eine kompakte Fluoreszenzmikroskopeinheit (200) zur Abbildung fluoreszierender Proben (1) ist, umfassend:
a. eine Beleuchtungsschicht (1001), die mehr als eine Lichtquelle (12, 12a, 12b, 12c), mehr als eine optische Linse (11, 11a, 11b, 11c), mehr als einen Anregungsfilter (10, 10a, 10b, 10c) und eine Strahlkombinationsoptik (9, 9a, 9b) umfasst;
b. einen oder mehrere dichroitische Spiegel (3, 3a, 3b, 3c);
c. eine Objektivlinse (2);
d. eine Detektionsschicht (1000), die einen Bildsensor (7), einen oder mehrere Emissionsfilter (4), eine Tubuslinse (5) und/oder einen oder mehrere optische Spiegel (6, 6a, 6b) umfasst;
wobei der eine oder die mehreren dichroitischen Spiegel (3, 3a, 3b, 3c) zu Folgendem angeordnet sind:
Übertragen von Licht, das von der Beleuchtungsschicht (1001) stammt und durch die Objektivlinse (2) durchgeht, um die Probe (1) zu beleuchten; und
Reflektieren von Fluoreszenzlicht, das von der Probe (1) emittiert und von der Objektivlinse (2) gesammelt wird, in Richtung der Detektionsschicht (1000), und wobei
die Portalrahmenstruktur (30a, 30b) eine innere Öffnung (130) umfasst, die es ermöglicht, die Probenschale (22) innerhalb der Öffnung (130) zu positionieren, und
wobei die Detektionsschicht (1000) innerhalb des Außengehäuses (20) angeordnet und an einem unteren Abschnitt der Rahmenstruktur sowie unterhalb der Probenschale (22) befestigt ist, und die Beleuchtungsschicht (1001a) an der Rahmenstruktur des Portalsystems befestigt ist, derart, dass die Beleuchtungsschicht (1001a) und die Detektionsschicht (1000) als Reaktion auf die Betätigung des mindestens einen Bewegungselements (50, 60, 70, 80, 90) synchron in einer ebenen Bewegung bewegbar sind, wobei
eine Steuereinheit zum Steuern der Betätigung der Bewegungselemente (50, 60, 70, 80, 90) bereitgestellt ist, wobei die Steuereinheit die Bewegung der Portalrahmenstruktur (30a, 30b), der Detektionsschicht (1000) und der Beleuchtungsschicht (1001) in einem vorgegebenen Muster durch Betätigung des Bewegungselements ermöglicht.

2. Zellüberwachungssystem (3000) nach Anspruch 1, wobei die kompakte Fluoreszenzmikroskopeinheit (200) ein Epifluoreszenzmikroskop umfasst.

3. Zellüberwachungssystem (3000) nach Anspruch 1 oder 2, das eine Verarbeitungseinheit zum Erfassen und Verarbeiten von Bildern umfasst, die vom Bildgebungssystem (300) abgerufen werden.

4. Zellüberwachungssystem (3000) nach einem der Ansprüche 1-3, wobei die Bewegungselemente (50, 60, 70, 80, 90) Motoren, Riemen, Wellen, Riemenscheiben und Stehlager umfassen.

5. Zellüberwachungssystem (3000) nach einem der Ansprüche 1-4, wobei das Portalsystem durch einen Doppelriemenkonfigurationsmechanismus angetrieben wird.

6. Zellüberwachungssystem (3000) nach Anspruch 5, wobei der Doppelriemenkonfigurationsmechanismus eine kombinierte Riemenbefestigungs- und Spannvorrichtung ist, die einen Doppelwellen-Rotationsmotor in Kombination mit Riemen umfasst.

7. Zellüberwachungssystem (3000) nach einem der Ansprüche 1-6, das ferner ein Dämpfungssystem umfasst.

8. Zellüberwachungssystem nach einem der Ansprüche 1-7, wobei die Beleuchtungsschicht (1001a) in Verbindung mit der Detektionsschicht (1000) angeordnet und an einem unteren Abschnitt der Rahmenstruktur befestigt ist.

9. Zellüberwachungssystem (3000) nach einem der Ansprüche 1-8, wobei die Detektionsschicht (1000) eine gefaltete Optik umfasst.

10. Zellüberwachungssystem (3000) nach einem der Ansprüche 1 bis 9, wobei die Steuereinheit es dem Bildgebungssystem (300) ermöglicht, beliebige Proben (1), die auf der Probenschale (22) positioniert sind, in einem vorbestimmten Muster zu lesen und zu überwachen.

11. Zellüberwachungssystem (3000) nach einem der Ansprüche 1-10, wobei die Probenschale (22) abnehmbar ist.

## Revendications

1. Système de surveillance de cellules (300) destiné à la surveillance automatique de cellules comprenant
un boîtier extérieur (20),
un plateau à échantillons (22) adapté pour recevoir un échantillon (1), ledit plateau à échantillons (22) étant positionné à l'intérieur du boîtier extérieur (20),
un système de support (21) agencé au moins partiellement à l'intérieur du boîtier extérieur (20), ledit système de support comprenant un encadrement d'éléments étendus reliés, ledit encadrement comprenant
un premier élément étendu (23a, 23b) conçu pour s'étendre au moins dans une direction latitudinale, et
au moins un second élément étendu (40a, 40b) conçu pour s'étendre dans une direction longitudinale, ladite direction longitudinale étant perpendiculaire à ladite direction latitudinale, dans lequel le premier élément étendu (23a, 23b) repose sur l'au moins un second élément étendu (40a, 40b) et
une structure de cadre de support (30a, 30b) s'étendant le long d'une direction orthogonale perpendiculaire à la direction latitudinale et à la direction longitudinale, dans lequel le premier élément étendu (23a, 23b) supporte la structure de cadre de support (30a, 30b),
au moins un élément mobile (50, 60, 70, 80, 90),
un système d'imagerie (300) agencé sur la structure de cadre de support,
dans lequel le système d'imagerie (300) est une unité microscope à fluorescence compact (200) pour obtenir des images d'échantillons fluorescents (1), comprenant :
a. une couche d'illumination (1001) comprenant plusieurs sources lumineuses (12, 12a, 12b, 12c), plusieurs lentilles optiques (11, 11a, 11b, 11c), plusieurs filtres d'excitation (10, 10a, 10b, 10c) et des optiques de combinaison de faisceaux (9, 9a, 9b) ;
b. un ou plusieurs miroirs dichroïques (3, 3a, 3b, 3c) ;
c. une lentille d'objectif (2) ;
d. une couche de détection (1000) comprenant un capteur d'images (7), un ou plusieurs filtres d'émission (4), une lentille tubulaire (5) et/ou un ou plusieurs miroirs optiques (6, 6a, 6b) ;
dans lequel le ou les miroirs dichroïques (3, 3a, 3b, 3c) sont agencés de façon à :
transmettre la lumière provenant de la couche d'illumination (1001) et traverser la lentille d'objectif (2) pour illuminer l'échantillon (1) ; et
réfléchir la lumière fluorescente émise par l'échantillon (1) et collectée par la lentille d'objectif (2) vers la couche de détection (1000), et dans lequel
la structure de cadre de support (30a, 30b) comprend un orifice interne (130) permettant de positionner le plateau à échantillons (22) à l'intérieur dudit orifice (130), et
ladite couche de détection (1000) est agencée à l'intérieur du boîtier extérieur (20) et fixée à une partie inférieure de la structure de cadre, sous le plateau à échantillons (22), et la couche d'illumination (1001a) est fixée à la structure de cadre du système de support, de telle sorte que la couche d'illumination (1001a) et la couche de détection (1000) puissent se déplacer de manière synchrone selon un mouvement plan en réponse à l'actionnement dudit au moins un élément mobile (50, 60, 70, 80, 90), dans lequel
une unité de commande pour commander l'actionnement des éléments mobiles (50, 60, 70, 80, 90) est fournie, dans lequel l'unité de commande permet le mouvement de la structure de cadre de support (30a, 30b), de la couche de détection (1000) et de la couche d'illumination (1001) selon un modèle prédéfini par l'actionnement de l'élément mobile.

2. Système de surveillance de cellules (3000) selon la revendication 1, dans lequel l'unité microscope à fluorescence compact (200) comprend un microscope à épifluorescence.

3. Système de surveillance de cellules (3000) selon la revendication 1 ou 2, comprenant une unité de traitement pour collecter et traiter des images récupérées à partir du système d'imagerie (300).

4. Système de surveillance de cellules (3000) selon l'une quelconque des revendications 1 à 3, dans lequel les éléments mobiles (50, 60, 70, 80, 90) comprennent des moteurs, des courroies, des arbres, des poulies et des paliers.

5. Système de surveillance de cellules (3000) selon l'une quelconque des revendications 1 à 4, dans lequel le système de support est entraîné par un mécanisme ayant une configuration à double courroie.

6. Système de surveillance de cellules (3000) selon la revendication 5, dans lequel le mécanisme de configuration à double courroie est un mécanisme combiné de montage et de tension de courroies comprenant un moteur rotatif à arbre double en combinaison avec des courroies.

7. Système de surveillance de cellules (3000) selon l'une quelconque des revendications 1 à 6, comprenant en outre un système d'amortissement.

8. Système de surveillance de cellules selon l'une quelconque des revendications 1 à 7, dans lequel la couche d'illumination (1001a) est agencée en relation avec la couche de détection (1000) et fixée à une partie inférieure de la structure de cadre.

9. Système de surveillance de cellules (3000) selon l'une quelconque des revendications 1 à 8, dans lequel la couche de détection (1000) comprend des optiques repliées.

10. Système de surveillance de cellules (3000) selon l'une quelconque des revendications 1 à 9, dans lequel l'unité de commande permet au système d'imagerie (300) de lire et de surveiller tous les échantillons (1) positionnés sur le plateau à échantillons (22) selon un modèle prédéfini.

11. Système de surveillance de cellules (3000) selon l'une quelconque des revendications 1 à 10, dans lequel le plateau à échantillons (22) est amovible.
